(19) **Europäisches Patentamt**
**European Patent Office**
**Office européen des brevets**

(11) **EP 3 438 887 A1**

(12) **EUROPEAN PATENT APPLICATION**
published in accordance with Art. 153(4) EPC

(43) Date of publication:
**06.02.2019 Bulletin 2019/06**

(21) Application number: **16897081.2**

(22) Date of filing: **14.12.2016**

(51) Int Cl.:
**G06N 3/02** (2006.01)   **G06F 17/30** (2019.02)
**G06N 99/00** (2019.01)

(86) International application number:
**PCT/JP2016/087186**

(87) International publication number:
**WO 2017/168865 (05.10.2017 Gazette 2017/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **28.03.2016 JP 2016063785**

(71) Applicant: **Sony Corporation
Tokyo 108-0075 (JP)**

(72) Inventors:
• **IDE, Naoki
Tokyo 108-0075 (JP)**
• **OOBUCHI, Yukio
Tokyo 108-0075 (JP)**
• **KOBAYASHI, Yoshiyuki
Tokyo 108-0075 (JP)**
• **FUKUI, Akira
Tokyo 108-0075 (JP)**
• **TAKAMATSU, Shingo
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE AND INFORMATION PROCESSING METHOD**

(57)   [Object] To provide a mechanism capable of providing information indicating the appropriateness of a computational result by a model constructed by machine learning.

[Solution] An information processing apparatus includes: a first acquisition section that acquires a first data set including a combination of input data and output data obtained by inputting the input data into a neural network; a second acquisition section that acquires one or more second data sets including an item identical to the first data set; and a generation section that generates information indicating a positioning of the first data set in a relationship with the one or more second data sets.

FIG. 6

**Description**

Technical Field

The present disclosure relates to an information processing apparatus and an information processing method.

Background Art

In recent years, technologies that execute computations such as prediction or recognition using a model constructed by machine learning are being used widely. For example, Patent Literature 1 below discloses a technology that, while continuing a real service, improves a classification model by machine learning while also checking to a certain extent the degree of influence on past data.

Citation List

Patent Literature

Patent Literature 1: JP 2014-92878A

Disclosure of Invention

Technical Problem

However, in some cases it is difficult for humans to understand the appropriateness of a computational result using a model constructed by machine learning. For this reason, one has been constrained to indirectly accept the appropriateness of the computational result, such as by accepting that the data set used for advance learning is suitable, that unsuitable learning such as overfitting and underfitting has not been executed, and the like, for example. Accordingly, it is desirable to provide a mechanism capable of providing information indicating the appropriateness of a computational result by a model constructed by machine learning.

Solution to Problem

According to the present disclosure, there is provided an information processing apparatus including: a first acquisition section that acquires a first data set including a combination of input data and output data obtained by inputting the input data into a neural network; a second acquisition section that acquires one or more second data sets including an item identical to the first data set; and a generation section that generates information indicating a positioning of the first data set in a relationship with the one or more second data sets.

In addition, according to the present disclosure, there is provided an information processing apparatus including: a notification section that notifies an other apparatus of input data; and an acquisition section that acquires, from the other apparatus, information indicating a positioning of a first data set in a relationship with a second data set including an item identical to the first data set, the first data set including a combination of output data obtained by inputting the input data into a neural network.

In addition, according to the present disclosure, there is provided an information processing method including: acquiring a first data set including a combination of input data and output data obtained by inputting the input data into a neural network; acquiring one or more second data sets including an item identical to the first data set; and generating, by a processor, information indicating a positioning of the first data set in a relationship with the one or more second data sets.

In addition, according to the present disclosure, there is provided an information processing method including: notifying an other apparatus of input data; and acquiring, by a processor, from the other apparatus, information indicating a positioning of a first data set in a relationship with a second data set including an item identical to the first data set, the first data set including a combination of output data obtained by inputting the input data into a neural network.

Advantageous Effects of Invention

According to the present disclosure as described above, there is provided a mechanism capable of providing information indicating the appropriateness of a computational result by a model constructed by machine learning. Note that the effects described above are not necessarily limitative. With or in the place of the above effects, there may be achieved any one of the effects described in this specification or other effects that may be grasped from this specification.

Brief Description of Drawings

FIG. 1 is a diagram illustrating an example of a diagrammatic configuration of a system according to an embodiment of the present disclosure.
FIG. 2 is a block diagram illustrating an example of a logical configuration of a processing apparatus according to the embodiment.
FIG. 3 is a block diagram illustrating an example of a logical configuration of a terminal apparatus according to the embodiment.
FIG. 4 is a diagram illustrating an example of a UI according to the embodiment.
FIG. 5 is a diagram illustrating an example of a UI according to the embodiment.
FIG. 6 is a diagram illustrating an example of a UI according to the embodiment.
FIG. 7 is a diagram illustrating an example of a UI according to the embodiment.
FIG. 8 is a diagram illustrating an example of a UI according to the embodiment.
FIG. 9 is a diagram illustrating an example of a UI according to the embodiment.
FIG. 10 is a diagram illustrating an example of a UI according to the embodiment.
FIG. 11 is a diagram illustrating an example of a UI according to the embodiment.
FIG. 12 is a diagram illustrating an example of a UI according to the embodiment.
FIG. 13 is a diagram illustrating an example of a UI according to the embodiment.
FIG. 14 is a diagram illustrating an example of a UI according to the embodiment.
FIG. 15 is a diagram illustrating an example of the flow of a process of visualizing the response of a neural network executed in a system according to the embodiment.
FIG. 16 is a diagram illustrating an example of a UI according to the embodiment.
FIG. 17 is a diagram illustrating an example of a UI according to the embodiment.
FIG. 18 is a diagram for explaining a process of evaluating a work of art according to the embodiment.
FIG. 19 is a block diagram illustrating an example of a hardware configuration of the information processing apparatus according to the embodiment.

Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.
Hereinafter, the description will proceed in the following order.

1. Introduction

1.1. Technical problem
1.2. Neural network

2. Exemplary configurations

2.1. Exemplary configuration of system
2.2. Exemplary configuration of processing apparatus
2.3. Exemplary configuration of terminal apparatus

3. Technical features

3.1. Overview
3.2. First method
3.3. Second method
3.4. Process flow

4. Application examples
5. Hardware configuration example
6. Conclusion

<<1. Introduction>>

<1.1. Technical problem>

In the machine learning framework of the related art, the design of feature quantities, or in other words, the design of the method for calculating the values required by computations such as recognition or prediction (that is, regression) has been carried out using human-led analysis, observation, incorporation of rules of thumb, and the like. In contrast, with deep learning, the design of feature quantities is entrusted to the function of the neural network. Because of this difference, in recent years, technologies using deep learning have come to overwhelm other technologies using machine learning.

A neural network is known to be capable of approximating an arbitrary function. With deep learning, by exploiting this characteristic of universal approximation, the series of processes from the design of a process for transforming data into feature quantities up to the computational process that executes recognition, prediction, or the like from feature quantities can be executed in an end-to-end manner without making distinctions. Also, with regard to the feature quantity transformation process and the computational processes such as recognition, prediction, or the like, deep learning is freed from the constraints on expressive ability imposed by design with the range of human understanding. Because of such tremendous improvements in expressive ability, deep learning has made it possible to automatically construct feature quantities and the like which are not understandable, analyzable, or discoverable by human experience or knowledge.

On the other hand, in a neural network, although the process of obtaining a computational result from input data is learned as a mapping function, in some cases the mapping function takes a form which is not easy for humans to understand. Consequently, in some cases it is difficult to persuade humans that the computational result is correct.

For example, it is conceivable to use deep learning to assess the real estate prices of existing apartments. In this case, for example, a multidimensional vector of the "floor area", "floor number", "time on foot from station", "age of building", "most recent contract price of a different apartment in the same building", and the like of a property becomes the input data, and the "assessed value" of the property becomes the output data. By learning a relationship (that is, a mapping function) between input and output data in a data set collected in advance, the neural network after learning becomes able to calculate output data corresponding to new input data. For example, in the example of real estate price assessment described above, the neural network is able to calculate a corresponding "assessed value" when input data having items (such as "floor area", for example) similar to when learning is input.

However, from the output data alone, it is difficult to accept whether or not the output data was derived via an appropriate computation. Accordingly, one has been constrained to indirectly accept the appropriateness of the computation by accepting that the data set used for advance learning is suitable, and that unsuitable learning such as overfitting and underfitting has not been executed.

Thus, one embodiment of the present disclosure provides a technology capable of providing information for directly knowing how a computational result was derived by a neural network.

<1.2. Neural network>

• Overview

In general, in recognition or prediction (that is, regression) technologies not just limited to neural networks, the function that maps a data variable x onto an objective variable y (for example, a label, a regression value, or a prediction value) is expressed by the following formula.

[Math. 1]

$$y = f(x) \qquad \cdots \quad (1)$$

However, each of x and y may also be a multidimensional (for example, x is a D-dimensional, and y is a K-dimensional) vector. Also, f is a function determined for each dimension of y. In a recognition or regression problem, finding the function f is typical in the field of machine learning, and is not just limited to a neural network or deep learning.

For example, in a linear regression problem, it is hypothesized that the regression takes the form of a linear response with respect to input, like in the following formula.

[Math. 2]

$$y = Ax + b \qquad \cdots \ (\,2\,)$$

Herein, A and b are matrices or vectors which do not depend on the input x. Each component of A and b may also be treated as a parameter of the model illustrated in the above Formula (2). With a model expressed in this form, it is possible to describe the calculation result easily. For example, assuming that K=1 and y is a scalar value $y_1$, A is expressed as a 1×D matrix. Accordingly, assuming that the value of each component of A is wj=$a_{1j}$, the above Formula (2) is transformed into the following formula.
[Math. 3]

$$y_1 = w_1 x_1 + w_2 x_2 + \cdots w_D x_D + b_1 \qquad \cdots \ (\,3\,)$$

According to the above formula, $y_1$ is a weighted sum of the input x. In this way, if the mapping function is a simple weighted sum, it is easy to describe the contents of the mapping function in a way that humans can understand. Although a detailed description is omitted, the same also applies to classification problems.
Next, an example of performing some kind of nonlinear transformation (however, a linear transformation may also be included in the nonlinear transformation) on the input will be considered. The vector obtained by the nonlinear transformation is called a feature vector. Hypothetically, if the nonlinear transformation is known, the function of the nonlinear transformation (hereinafter also designated the nonlinear function) is used to express the regression formula as follows.
[Math. 4]

$$y = A\phi(x) + b \qquad \cdots \ (\,4\,)$$

Herein, $\varphi(x)$ is a nonlinear function for finding a feature vector, and for example, is a function that outputs an M-dimensional vector. For example, assuming that K=1 and y is a scalar value $y_1$, A is expressed as a 1×M matrix. Accordingly, assuming that the value of each component of A is wj=$a_{1j}$, the above Formula (4) is transformed into the following formula.
[Math. 5]

$$y_1 = w_1 \phi_1(x) + \cdots w_M \phi_M(x) + b_1 \qquad \cdots \ (\,5\,)$$

According to the above formula, $y_1$ is a weighted sum of the feature quantities of each dimension. With this mapping function, since the mapping function is a weighted sum of known feature quantities, it is also considered easy to describe the contents of the mapping function in a way that humans can understand.
Herein, the model parameters A and b are obtained by learning. Specifically, the model parameters A and b are learned such that the above Formula (1) holds for a data set supplied in advance. Herein, as an example, assume that the data set is $(x_n, y_n)$, where n=1, ..., N. In this case, learning refers finding the weights w whereby the difference between the prediction value $f(x_n)$ and the actual value $y_n$ is reduced in all supplied data sets. The difference may be the sum of squared errors illustrated in the following formula, for example.
[Math. 6]

$$L = \sum_{n=1}^{N} |y_n - f(x_n)|^2 \qquad \cdots \ (\,6\,)$$

The function L expressing the difference may be a simple sum of squared errors, a weighted sum of squared errors weighted by dimension, or a sum of squared errors including constraint terms (such as an L1 constraint or an L2 constraint, for example) expressing functional constraints on the parameters. Otherwise, the function L expressing the difference may be an arbitrary function, insofar as the function is an index that expresses how correctly the output prediction value $f(x_n)$ predicts the actual value $y_n$, such as binary cross entropy, categorical entropy, log-likelihood, or variational lower bound. Note that besides learning, the model parameters A and b may also be human-designed.
In some cases, the model parameters A and b obtained by learning are not round values compared to the human-designed case. However, since it is easy to know how much weight (that is, contribution) is set for which dimension, this model is also considered to be in the range of human understanding.

Meanwhile, in the case of creating a model designed to be human-understandable in this way, the variations of data that can be expressed by the model become limited. For this reason, actual data cannot be expressed adequately, that is, adequate prediction is difficult in many cases.

Accordingly, to increase the variations of data that can be expressed by the model, it is desirable for even the portion of feature quantities from the nonlinear transformation designed using existing experience and knowledge to be obtained by learning. For this purpose, approximation of a feature function by a neural network is effective. A neural network is a model suited to expressing composite functions. Accordingly, expressing the portion of feature transformation and a composite function of subsequent processes with a neural network is considered. In this case, it becomes possible to also entrust to learning the portion of feature quantity transformation by a known nonlinear transformation, and inadequate expressive power due to design constraints can be avoided.

As illustrated in the following formulas, a neural network includes a composite function which is a layered joining of a linear combination of inputs to the outputs from a nonlinear function (Activation) of nonlinear combination values.

[Math. 7]

$$x^{(0)} = x$$
$$x^{(l+1)} = f^{(l+1)}\big(A^{(l)}x^{(l)} + b^{(l)}\big), \qquad l = 0 \dots L - 1 \qquad \cdots \ (7)$$

[Math. 8]

$$y = f^{(L)}\left(f^{(L-1)} \dots f^{(1)}(x)\right) \qquad \cdots \ (8)$$

Herein, $A^{(l)}$ and the vector $b^{(l)}$ are the weight and the bias of the linear combination of the lth layer, respectively. Also, $f^{(l+1)}$ is a vector combining the nonlinear (Activation) function of the (l+1)th layer. The reason for a vector or matrix is that the inputs and outputs of each layer are multidimensional. Hereinafter, the parameters of the neural network are taken to refer to $A^{(l)}$ and $b^{(l)}$, where l=0, ..., L-1.

• Objective function

In the neural network, the parameters are learned such that the above Formula (8) holds for a data set supplied in advance. Herein, as an example, assume that the data set is $(x_n, y_n)$, where n=1, ..., N. In this case, learning refers finding the parameters whereby the difference between the prediction value $f(x_n)$ and the actual value $y_n$ is reduced in all supplied data sets. This difference is expressed by the following formula, for example.

[Math. 9]

$$L(\theta) = \sum_{n=1}^{N} l\big(y_n, f(x_n)\big) \qquad \cdots \ (9)$$

Herein, $l(y_n, f(x_n))$ is a function that expresses the distance between the prediction value $f(x_n)$ and the actual value $y_n$. Also, $\theta$ is a merging of the parameters $A^{(l)}$ and $b^{(l)}$ included in f, where l=0, ..., L-1. $L(\theta)$ is also designated the objective function. Hypothetically, in the case in which the following formula holds, the objective function $L(\theta)$ is a squared error function.

[Math. 10]

$$l\big(y_n, f(x_n)\big) = |y_n - f(x_n)|^2 \qquad \cdots \ (10)$$

The objective function may also be other than the sum of squared error, and may be, for example, weighted squared error, normalized squared error, binary cross entropy, categorical entropy, or the like. Which kind of objectifying function is appropriate depends on the data format, the task (for example, whether y is discrete-valued (classification problem) or continuously-valued (regression problem)), and the like.

• Learning

Learning is executed by minimizing the objective function L(θ). For this purpose, a method that uses a gradient related to the parameter θ may be used, for example. In one example known as the stochastic gradient method, the parameter θ that minimizes the objective function L(θ) is repeatedly searched for while the parameter is successively updated in accordance with the following formula.
[Math. 11]

$$\theta' = \theta + \alpha \sum_{n=N^b}^{N^{b+1}} \frac{\partial l(y_n, f(x_n))}{\partial \theta} \quad \cdots \ (1\ 1)$$

Herein, the process of summing the gradient over the range from $N^b$ to $N^{b+1}$ is also designated mini-batch. Methods that extend the above method, such as AdaGrad, RMProp, and AdaM, are often used for learning. With these methods, the variance of the gradient is used to eliminate scale dependence or the second moment, moving average, or the like of the gradient δl/δθ is used to thereby avoid excessive response and the like.
In a neural network, by utilizing the rules of the composite function, the gradient of the objective function is obtained as a recurrence relation like the following formula.
[Math. 12]

$$\delta^{(L)} = l(y_n, f(x_n))$$
$$\delta_j^{(l)} = f_j^{(l)'}(z) \sum_k \delta_k^{(l+1)} w_{kj}^{(l)}$$
$$\frac{\partial l(y_n, f(x_n))}{\partial w_{ij}^{(l)}} = z_i \delta_j \quad \cdots \ (1\ 2)$$

The processing of obtaining a gradient with a recurrence relation is also called backpropagation. Since gradients are obtained easily by the recurrence relation, these gradients may be used in Formula (11) or a gradient method derived therefrom to successively estimate the parameter.

• Configuration of each layer of neural network

Each layer of the neural network may take various configurations. The principal configuration of each layer of the neural network is determined by the configuration of linear combination and the type of nonlinear function. Configurations of linear combination chiefly include fully connected networks, convolutional networks, and the like. On the other hand, with regard to nonlinear combination functions, a succession of new functions are being proposed. One such example is the sigmoid illustrated in the following formula.
[Math. 13]

$$\sigma(x) = \frac{1}{1 + e^{-x}} \quad \cdots \ (1\ 3)$$

The above Formula (13) is a nonlinear mapping that transforms an input over (-∞, ∞) to an output over [0, 1]. A derivative of the sigmoid is Tanh illustrated in the following formula.
[Math. 14]

$$tanh(x) = \frac{1 - e^x}{1 + e^x} \quad \cdots \ (1\ 4)$$

Also, rectified linear units (Relu) illustrated in the following formula is an activation function in use recently.
[Math. 15]

$$\text{relu}(x) = \max(0, x) \qquad \cdots \quad (15)$$

Additionally, Softmax and Softplus illustrated in the following formula and the like are also well-known.
[Math. 16]

$$softmax(x_k) = \frac{e^{x_k}}{\sum_{i=1}^{n} e^{x_i}}, \qquad k = 1..n \qquad \cdots \quad (16)$$
$$softplus(x) = log(1 + e^x)$$

In this way, in a neural network with increased expressive ability through the use of a composite function, the mapping function is learned by using a data set that includes a large amount of data. For this reason, the neural network is able to achieve highly accurate recognition or prediction, without designing feature quantities by human work as in the past.

<<2. Exemplary configurations>>

<2.1. Exemplary configuration of system>

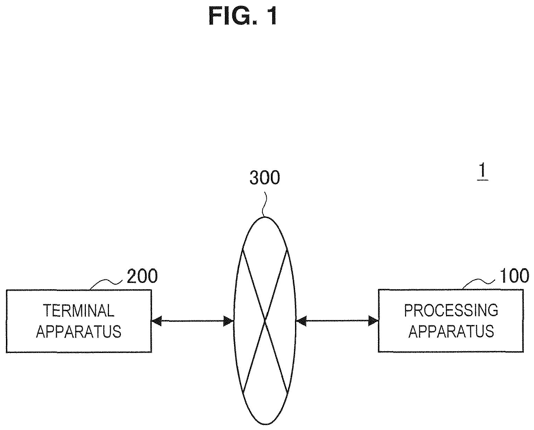

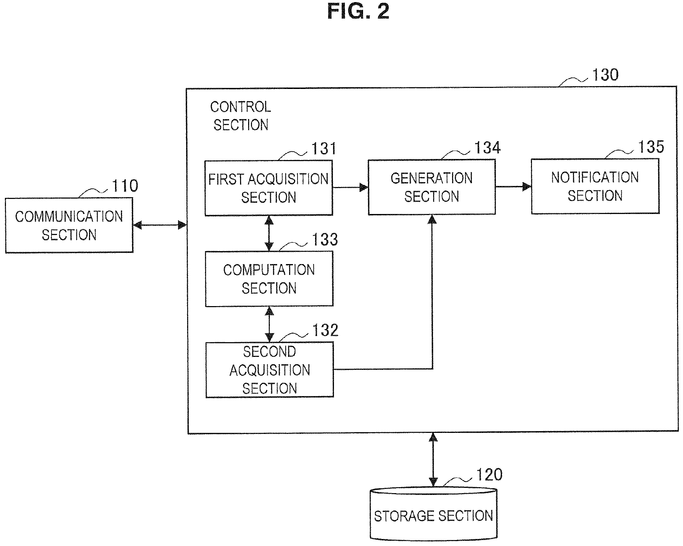

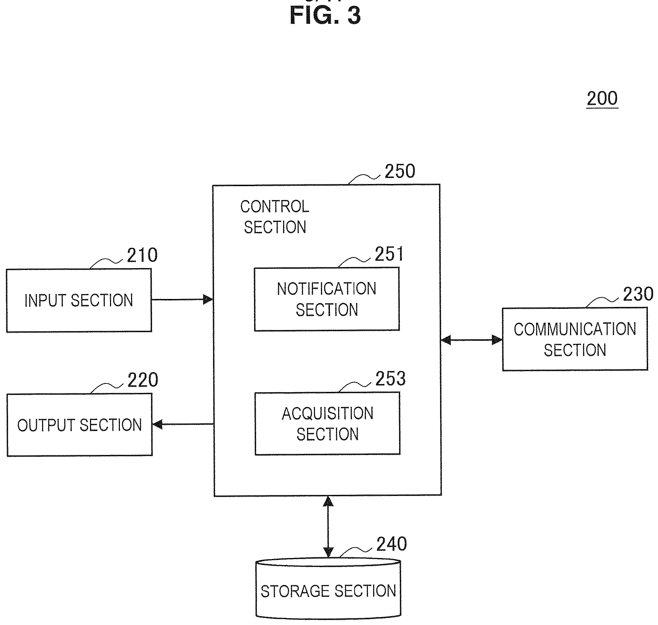

FIG. 1 is a diagram illustrating an example of a diagrammatic configuration of a system according to an embodiment of the present disclosure. As illustrated in FIG. 1, the system 1 includes a processing apparatus 100 and a terminal apparatus 200.
The processing apparatus 100 and the terminal apparatus 200 are connected by a network 300. The network 300 is a wired or wireless transmission line for information transmitted from apparatus connected by the network 300. The network 300 may include, for example, a cellular network, a wired local area network (LAN), a wireless LAN, or the like.
The processing apparatus 100 is an information processing apparatus that executes various processes. The terminal apparatus 200 is an information processing apparatus that functions as an interface with a user. Typically, the system 1 interacts with the user by the cooperative action of the processing apparatus 100 and the terminal apparatus 200.
Next, exemplary configurations of each apparatus will be described with reference to FIGS. 2 and 3.

<2.2. Exemplary configuration of processing apparatus>

FIG. 2 is a block diagram illustrating an example of a logical configuration of the processing apparatus 100 according to the present embodiment. As illustrated in FIG. 2, the processing apparatus 100 includes a communication section 110, a storage section 120, and a control section 130.

(1) Communication section 110

The communication section 110 includes a function of transmitting and receiving information. For example, the communication section 110 receives information from the terminal apparatus 200, and transmits information to the terminal apparatus 200.

(2) Storage section 120

The storage section 120 temporarily or permanently stores programs and various data for the operation of the processing apparatus 100.

(3) Control section 130

The control section 130 provides various functions of the processing apparatus 100. The control section 130 includes a first acquisition section 131, a second acquisition section 132, a computation section 133, a generation section 134, and a notification section 135. Note that the control section 130 may additionally include other components besides the above components. In other words, the control section 130 may also execute operations besides the operations of the above components.

The operation of each component will be described briefly. The first acquisition section 131 and the second acquisition section 132 acquire information. The computation section 133 executes various computations and learning of the neural network described later. The generation section 134 generates information indicating a result of computations or learning by the computation section 133. The notification section 135 notifies the terminal apparatus 200 of information generated by the generation section 134. Other detailed operations will be described in detail later.

<2.3. Exemplary configuration of terminal apparatus>

FIG. 3 is a block diagram illustrating an example of a logical configuration of the terminal apparatus 200 according to the present embodiment. As illustrated in FIG. 3, the terminal apparatus 200 includes an input section 210, an output section 220, a communication section 230, a storage section 240, and a control section 250.

(1) Input section 210

The input section 210 includes a function of receiving the input of information. For example, the input section 210 receives the input of information from a user. For example, the input section 210 may receive text input by a keyboard, touch panel, or the like, may receive voice input, or may receive gesture input. Otherwise, the input section 210 may receive data input from a storage medium such as flash memory.

(2) Output section 220

The output section 220 includes a function of outputting information. For example, the output section 220 outputs information through images, sound, vibration, light emission, or the like.

(3) Communication section 230

The communication section 230 includes a function of transmitting and receiving information. For example, the communication section 230 receives information from the processing apparatus 100, and transmits information to the processing apparatus 100.

(4) Storage section 240

The storage section 240 temporarily or permanently stores programs and various data for the operation of the terminal apparatus 200.

(5) Control section 250

The control section 250 provides various functions of the terminal apparatus 200. The control section 250 includes a notification section 251 and an acquisition section 253. Note that the control section 250 may additionally include other components besides the above components. In other words, the control section 250 may also execute operations besides the operations of the above components.

The operation of each component will be described briefly. The notification section 251 notifies the processing apparatus 100 of information indicating user input which is input into the input section 210. The acquisition section 253 acquires information indicating a result of computation by the processing apparatus 100, and causes the information to be output by the output section 220. Other detailed operations will be described in detail later.

<<2. Technical features>>

Next, technical features of the system 1 according to the present embodiment will be described.

<3.1. Overview>

The system 1 (for example, the computation section 133) executes various computations related to the neural network. For example, the computation section 133 executes the learning of the parameters of the neural network, as well as computations that accept input data as input into the neural network, and outputs output data. The input data includes each value of one or more input items (hereinafter also designated input values), and each input value is input into a unit that corresponds to an input layer of the neural network. Similarly, the output data includes each value of one or more output items (hereinafter also designated output values), and each output value is output from a unit that corresponds to an output layer of the neural network.

The system 1 according to the present embodiment provides a visualization of information indicating the response relationship of the inputs and outputs of the neural network. Through the visualization of information indicating the response relationship of the inputs and outputs, the basis of a computational result of the neural network is illustrated. Thus, the user becomes able to check against one's own prior knowledge, and intuitively accept the appropriateness of the computational result. For this purpose, the system 1 executes the following two types of neural network computations, and provides the computational results.

As a first method, the system 1 adds a disturbance to the input values, and provides a visualization of information indicating how the output value changed as a result. Specifically, the system 1 provides information indicating the positioning inside the distribution of output values in the case of locking some of the input values in the multidimensional input data, and varying (that is, adding a disturbance to) the other input values. With this arrangement, the user becomes able to grasp the positioning of the output values.

As a second method, the system 1 backpropagates the error of the output values to provide a visualization of information indicating the distribution of input values. Specifically, the system 1 provides information indicating the degree of contribution to the output values by the input values. With this arrangement, the user becomes able to grasp the positioning of the input values.

Otherwise, the system 1 provides a visualization of a calculating formula or statistical processing result (for example, a flag or the like) indicating the response relationship of the system 1. With this arrangement, the user becomes able to understand the appropriateness of the computational result in greater detail.

Regarding the first method, the system 1 visualizes the response of an output value y in the case of adding a disturbance r to an input value x in Formula (1). The response is expressed like the following formula.

[Math. 17]

$$f_k(r) = f(x + re_k) \qquad \cdots \quad (1\ 7)$$

Herein, r is the value of the disturbance on a k-axis. Also, $e_k$ is the unit vector of the k-axis.

Regarding the second method, the system 1 visualizes the contribution of the inverse response of an input value x in the case of adding a disturbance $\delta$ to an output value y in Formula (11) or Formula (12). In the case of considering the differential from the output side, the system 1 computes the error to each layer by backpropagation using the following formula.

[Math. 18]

$$\delta^{(L)} = l\big(y_n + \delta, f(x_n)\big) \qquad \cdots \quad (1\ 8)$$

Herein, by taking the following formula in the above Formula(12), the system 1 is also able to compute the backpropagation error to an input value itself.

[Math. 19]

$$f_j^{(0)'}(z) = 1 \qquad \cdots \quad (1\ 9)$$

Note that this visualization of response is not limited to the inputs into a neural network and the outputs from a neural network. For example, the response may also be visualized regarding input into a unit on the side close to the input and the output from a unit on the side close to the output in intermediate layers. Generally, on the side close to the output, feature quantities which are close to human-developed concepts, such as categories, are calculated. Also, on the side close to the input, feature quantities related to concepts closer to the data are calculated. The response between the two may also be visualized.

The above describes an overview of the visualization of response of a neural network. Hereinafter, an example of a UI related to the first method and the second method will be described specifically. As an example, a neural network is imagined in which real estate attribute information, such as the time on foot from the nearest station, the land area, and the age of the building, are treated as the input data, and a real estate price is output.

<3.2. First method>

• First data set

The system 1 (for example, the first acquisition section 131) acquires a first data set including combinations of input data and output data obtained by inputting the input data into the neural network. For example, the real estate attribute information corresponds to the input data, and the output data corresponds to the real estate price.

• Second data set

The system 1 (for example, the second acquisition section 132) acquires one or more second data sets that include items with the same values as the first data set. The second data set includes items with the same values as the first data set, and items corresponding to the output data. For example, the second data set includes combinations of real estate attribute information and real estate prices, similarly to the first data set. Additionally, for example, a part of the attribute information is identical to the first data set.
In particular, in the first method, the second data set may include, among the items included in the input data, a first item whose values are different from the first data set, and another second item whose values are identical to the first data set. For example, the first item corresponds to an input item which is a target of the response visualization, while the second item corresponds to an input item which is not a target of the response visualization. For example, in the case in which the target of the response visualization is the age of the building, a second data set is acquired in which, among the input items, only the age of the building is different, while the others are identical. In other words, the second data set corresponds to a data set for the case of adding a disturbance to the value of the input item which is the target of the response visualization, expressed by the above Formula (17). With this arrangement, the second data set becomes an appropriate data set for providing a response relationship to the user.
The second data set includes a data set generated by a neural network taught on the basis of a data set actually observed in past time. Specifically, the system 1 (for example, the computation section 133) uses the above Formula (17) to compute output data for the case of adding a disturbance to the input item which is the target of visualization on the input unit side, and generates the second data set. For example, in some cases, it may be difficult to acquire a sufficient amount of real data satisfying the conditions described above, namely, having values of an input item which is the target of the response visualization be different from the first data set while the values of other input items are identical to the first data set. In such cases, generating a data set by a neural network makes it possible to compensate for an insufficient amount of data.
The second data set may also include a data set actually observed in past time. For example, the system 1 acquires the second data set from a database (for example, the storage section 120) that accumulates real data of the attribute information and value of real estate bought and sold in past time. In this case, the second data set may be learning data used in the learning of a neural network.

• Generation of information indicating positioning

The system 1 (for example, the generation section 134) generates information indicating the positioning of the first data set in the relationship with the second data set. The generated information indicating the positioning is provided to the user by the terminal apparatus 200, for example. With this arrangement, it becomes possible to provide the basis of a computational result of the neural network to the user.

• Basic UI example

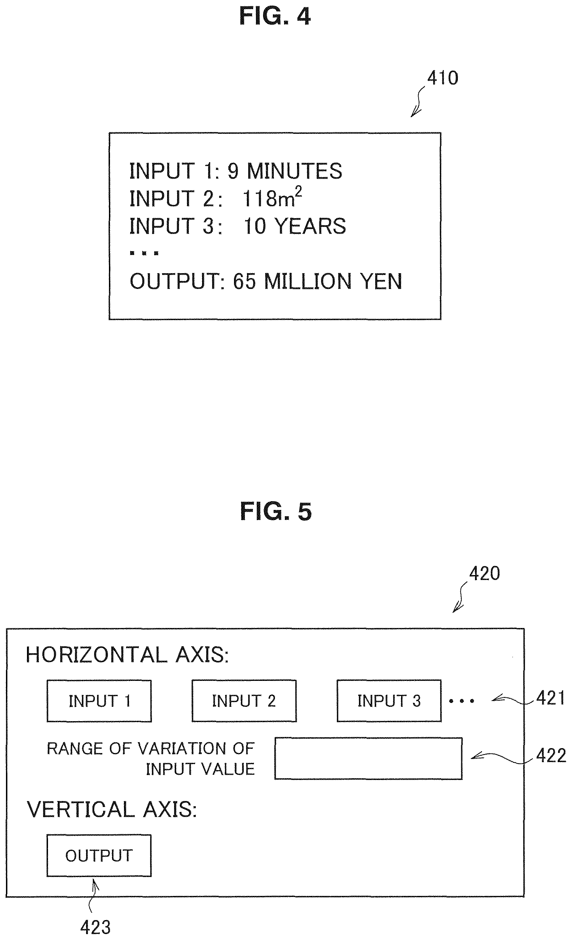

In the first method, the information indicating the positioning illustrates the relationship between the values of an input item (corresponding to the first item) which is the target of the response visualization and the value of an item corresponding to the output data in the first data set and the second data set. With this arrangement, it becomes possible to provide the response relationship, such as how the age of the building influences the real estate price, for example, to the user clearly. Hereinafter, FIGS. 4 to 6 will be referenced to describe an example of a user interface (UI) according to the first method. Note that the UI is displayed by the terminal apparatus 200, for example, and accepts the input of information. The same also applies to other UIs.
FIG. 4 is a diagram illustrating an example of a UI according to the present embodiment. As illustrated in FIG. 4, on the UI 410, a list of input real estate attribute information and a real estate price output from the neural network are provided. However, with only the above, it is difficult to distinguish whether or not the real estate price is appropriate, and also whether or not the process of calculating the real estate price is appropriate. Accordingly, the system 1 provides information indicating the basis of the appropriateness of the output real estate price to the user by the UI described below.

FIG. 5 is a diagram illustrating an example of a UI according to the present embodiment. By the UI 420 illustrated in FIG. 5, the user is able to set the conditions of the response visualization. For example, by pressing buttons 421, the user is able to select the input item to treat as the target of visualization. Note that each of "Input 1" to "Input 3" corresponds to each piece of real estate attribute information. Also, the user is able to set a range of variation of input values in an input form 422. The range corresponds to the width of the disturbance described above. Additionally, by pressing a button 423, the user is able to select the output item to treat as the target of visualization. In this example, since the output item included in the output data is the single item of real estate price, multiple selection options are not provided, but in the case in which there are multiple output items, multiple selection options may be provided. An input value of the input item to treat as the target of visualization in the first data set are also designated a target input value. Also, an output value of the output item to treat as the target of visualization in the first data set is also designated a target output value.

Note that although FIG. 5 illustrates an example in which the selection of an input item is performed by the pressing of the buttons 421, the present technology is not limited to such an example. For example, the selection of an input item may also be performed by selection from a list, or by selection from radio buttons.

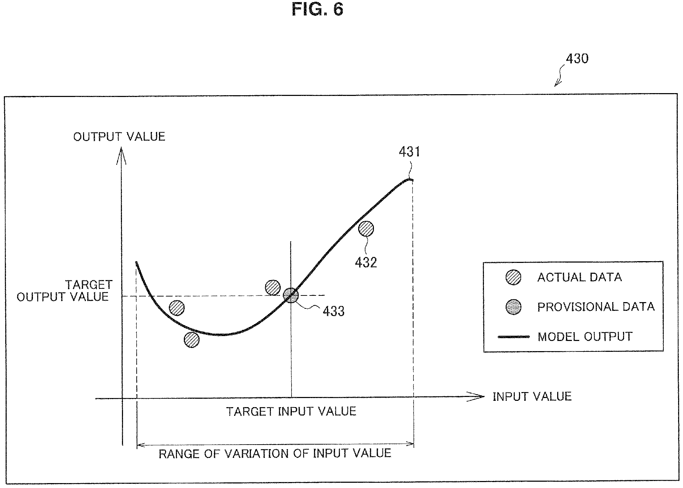

FIG. 6 is a diagram illustrating an example of a UI according to the present embodiment. By the UI 430 illustrated in FIG. 6, the response of an output value in the case of adding a disturbance to an input value is visualized by a graph. The X axis of the graph corresponds to the input value, and the Y axis corresponds to the output value. A model output curve 431 illustrates the curve of the output value from the neural network in the case of varying the input value of the response visualization virtually inside the specified range of variation. In other words, the model output curve 431 corresponds to the second data set generated by the neural network expressed by the above Formula (17). Also, actual data 432 is a plot of past data. In other words, the actual data 432 corresponds to the second data set actually observed in past time. Provisional data 433 indicates a target input value input by the user and a target output value output from the neural network, which are illustrated in the UI 410. In other words, the provisional data 433 corresponds to the first data set. By the model output curve 431, with regard to the input value which is the target of visualization, the user is able to check not only the actually input target input value and target output value, but also the state of the surrounding response (more specifically, inside the specified range of variation). With this arrangement, the user becomes able to check against one's own prior knowledge, and intuitively accept the appropriateness of the computational result.

Note that the number of points of actual data 432 to be plotted may be a certain number, or only data close to the model output curve 431 may be plotted. Herein, "close" refers to the distance (for example, the Euclidean distance) in the input space being close, and in the case of treating one of the intermediate layers as the input, refers to the distance in the intermediate layer being close. In the case in which the distance (for example, the squared distance) between the plot of the actual data 432 and the model output curve 431 is close, the user becomes able to accept the computational result by the neural network. Also, it is desirable for the plotted actual data 432 to include both data whose value is greater than and data whose value is less than the input value of at least the provisional data 433. Also, in the case in which the plot of the actual data 432 and the contents (for example, the entirety of the data set) of the actual data 432 are linked, the contents of the actual data 432 may be provided when the plot of the actual data 432 is selected.


• Applied UI examples


The system 1 (for example, the generation section) may also generate information indicating the response relationship between an input value into a unit of an input layer and an output value from a unit of an output layer, the input layer and the output layer being selected from intermediate layers of the neural network. This refers to executing the visualization of the response relationship between an input layer and an output layer executed in the above UI example in the intermediate layers. With this arrangement, the user becomes able to understand the response relationship in the intermediate layers, and as a result, becomes able to understand in greater detail the appropriateness of a computational result of the neural network. Also, for example, in the case in which an abstract concept is expected to be expressed in a specific intermediate layer, through a visualization of the response relationship in the intermediate layers, the user becomes able to know the concept.


- Graph


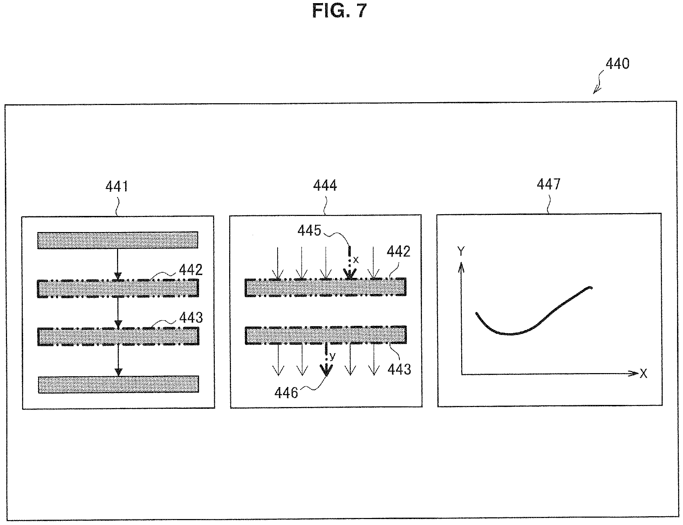

The information indicating the response relationship may also be a graph. A UI example of this case will be described with reference to FIG. 7.

FIG. 7 is a diagram illustrating an example of a UI according to the present embodiment. As illustrated in FIG. 7, a UI 440 includes UI blocks 441, 444, and 447. The UI block 441 is a UI for selecting intermediate layers to treat as the targets of the visualization of the response relationship. In the UI block 441, the unit (expressed as a rectangle, corresponding to a multidimensional vector) of each layer of the neural network and the computational part (corresponding to an arrow indicating the projection function from layer to layer) connected thereto are provided. As an example, suppose that the user selects an intermediate layer 442 as the input layer, and selects an intermediate layer 443 as the output layer. At this time, it is desirable to change the rectangle color and the line type, thickness, color, and the like of the rectangle frame, for example, to clearly indicate which layer has been selected as the input layer and which layer has been selected as the output layer.

The UI block 444 is a UI for selecting the unit (that is, the dimension) to treat as the target of the visualization of the response relationship from among the intermediate layer 442 and the intermediate layer 443 selected in the UI block 441. As illustrated in FIG. 7, in the UI block 444, the input and output of each unit are illustrated by arrows, and the arrows may be available for selection. Otherwise, in the case of an excessively large number of units, the UI block 444 may accept slide input or the input of a unit identification number, for example. As an example, suppose that the user selects a unit 445 from the intermediate layer 442, and selects a unit 446 from the intermediate layer 443.

The UI block 447 is a UI that visualizes the response relationship between the input unit and the output unit selected in the UI block 444 with a graph. The X axis of the graph corresponds to the input value into the unit 445, and the Y axis corresponds to the output value from the unit 446. The curve included in the graph of the UI block 447 is generated by a technique similar to the model output curve 431 illustrated in FIG. 6. In other words, the graph included in the UI block 447 is a graphing of the response of the unit 446 by locking the input values into input units other than the selected unit 445, and varying the input value into the selected unit 445. The locked input values into the input units other than the selected unit 445 refer to the values input into each input unit as a result of computation in the case of locking the input values into the neural network, for example. Note that likewise on this graph, it may also be possible to input a variation width of an input value, as illustrated on the UI 420. Also, likewise on this graph, actual data used during learning may also be plotted, similarly to the UI 430. The conditions of the actual data to be plotted and the providing of the contents of the actual data may also be similar to the UI 430.

Note that the UI blocks 441, 444, and 447 may be provided on the same screen, or may be provided through successive screen transitions. The same applies to other UIs that include multiple UI blocks.

- Function

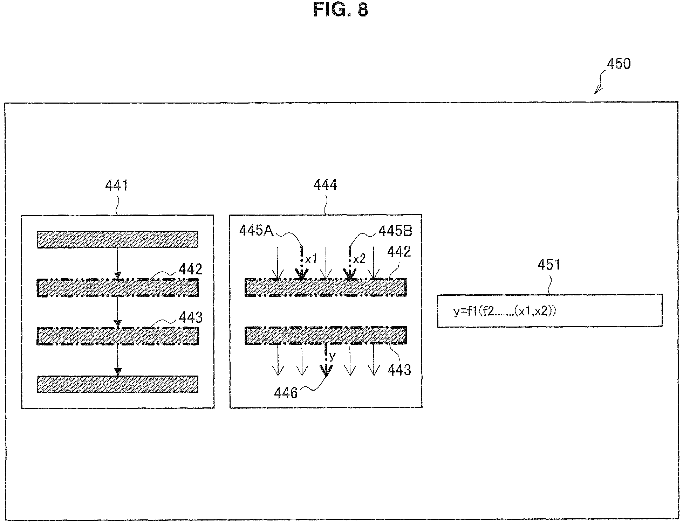

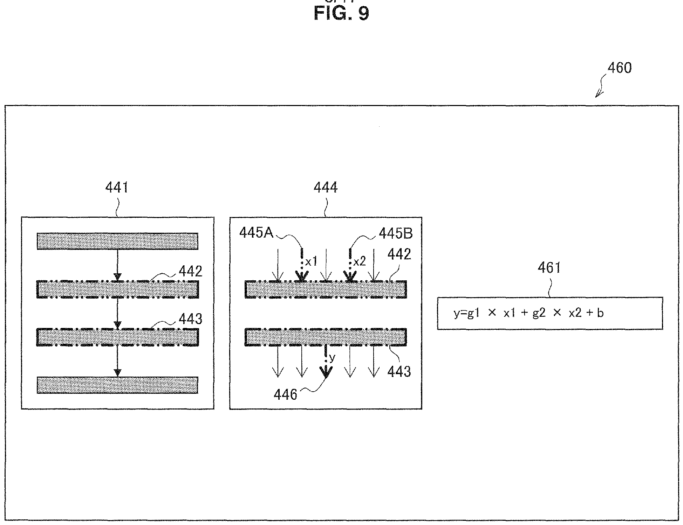

The information indicating the response relationship may also be a function. A UI example of this case will be described with reference to FIGS. 8 and 9.

FIG. 8 is a diagram illustrating an example of a UI according to the present embodiment. As illustrated in FIG. 8, a UI 450 includes UI blocks 441, 444, and 451, in a configuration in which the UI block 447 of the UI 440 has been replaced by the UI block 451. Note that in the UI 450, unlike the UI 440, multiple units 445A and 445B may be selected from the intermediate layer 442. The UI block 451 is a UI that visualizes the response relationship between the units 445A, 445B and the output unit selected in the UI block 444 with a function.

In the neural network, the response relationship of input and output is expressed by the above Formula (8). Formula (8) is a composite function of the linear combination by the model parameters A and b obtained by learning, and the nonlinear activation function f. However, this function is written with an enormous number of parameters, and it is normally difficult to understand the meaning thereof. Accordingly, the system 1 (for example, the generation section 134) generates a function with a reduced number of variables by treating the selected units 445A and 445B as variables, and locking the input values into input units other than the units 445A and 445B. Note that the locked input values into the input units other than the selected units 445A and 445B refer to the values input into each input unit as a result of computation in the case of locking the input values into the neural network, for example. Subsequently, the generated function is provided in the UI block 451. In this way, the system 1 provides a projection function that treats the selected input units as variables in an easy-to-understand format with a reduced number of variables. With this arrangement, the user becomes able to understand a partial response of the neural network easily.

In the case in which the function is difficult to understand for the user, an approximate function may also be provided as illustrated in FIG. 9. FIG. 9 is a diagram illustrating an example of a UI according to the present embodiment. The UI 460 illustrated in FIG. 9 has a configuration in which the UI block 451 of the UI 450 has been replaced by the UI block 461. In the UI block 461, an approximate function that linearly approximates the projection function with differential coefficients is provided. With this arrangement, the user becomes able to understand a partial response of the neural network more easily.

Note that in the UI block 451 or 461, the function may be provided in text format. Otherwise, the function may be provided as a statement in an arbitrary programming language. For example, the function may be stated in a programming language selected by the user from among a list of programming languages. In addition, the function provided in the UI block 451 or 461 may also be available to copy and paste into another arbitrary application.

- Neural network design assistance

The system 1 (for example, the generation section) may also generate and provide a UI for neural network design assistance.

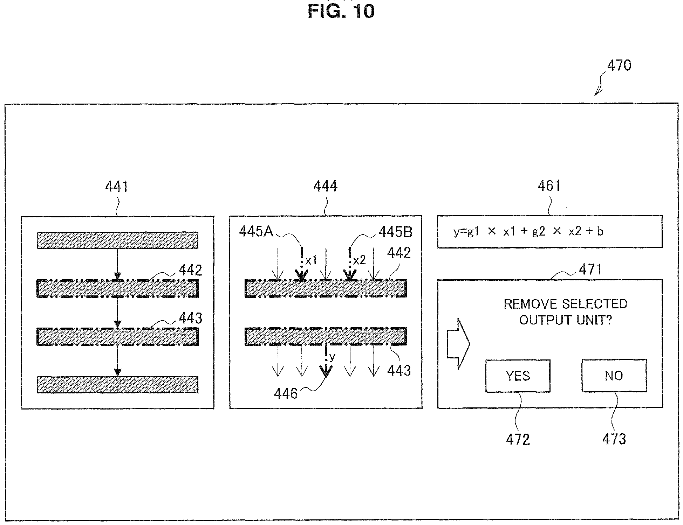

For example, the system 1 may generate information for proposing the removal of units in an input layer which do not contribute to an output value from a unit in an output layer. For example, in the UI 460, in the case in which the coefficients of the input/output response of a function provided in the UI block 461 are all 0 and the bias is also 0, the unit 446 does not contribute to the network downstream, and thus may be removed. In this case, the system 1 may generate information for proposing the removal of the output unit. An example of the UI is illustrated in FIG. 10. FIG. 10 is a diagram illustrating an example of a UI according to the present embodiment. The UI 470 illustrated in FIG. 10 has a configuration in which a UI block 471 has been added to the UI 460. The UI block 471 includes a message for proposing the removal of an output unit that does not contribute downstream. The output unit is removed if a YES button 472 is selected by the user, and is not removed if a NO button 473 is selected. Note that the removal of an output unit that does not contribute downstream may also be executed automatically.

For example, the system 1 may generate information related to a unit that reacts to specific input data. For example, the system 1 may detect a unit that reacts to the input data of a certain specific category (or class), and provide a message such as "This unit reacts to data in this category", for example, to the user. Furthermore, the system 1 may recursively follow the input units that contribute to the unit, and extract a sub-network that generates the unit. Additionally, the system 1 may also reuse the sub-network as a detector for detecting input data of the specific category.

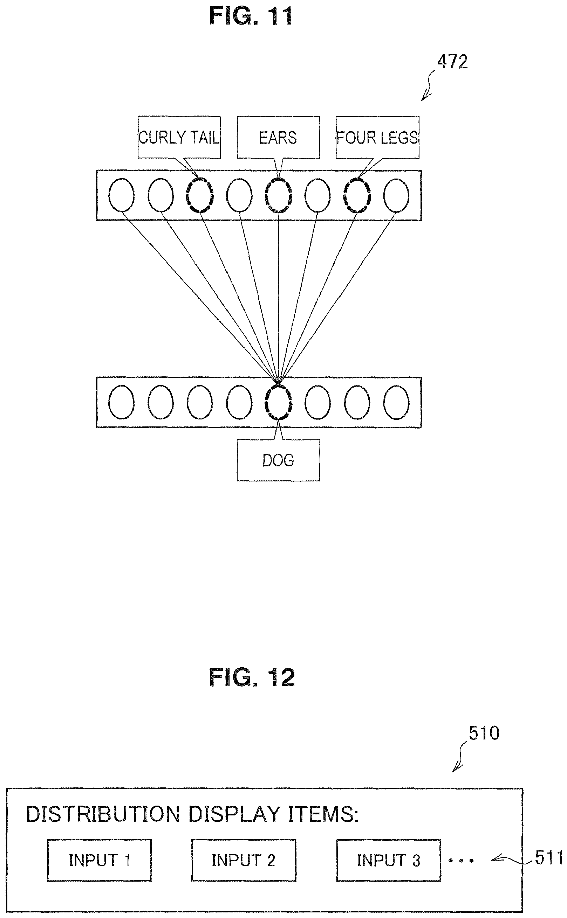

For example, suppose that a certain unit is a unit that reacts to "dog". In this case, it is also possible to treat the unit as a "dog detector". Furthermore, by classifying concepts subordinate to the concept by which "dog" is detected, the system 1 may provide a classification tree. A UI for associating a name such as "dog" or "dog detector" to the unit may also be provided. Also, besides a UI corresponding to the responsiveness of a unit, a UI corresponding to the distribution characteristics of a unit may be provided. FIG. 11 illustrates an example of a UI in which a name is associated with each unit. FIG. 11 is a diagram illustrating an example of a UI according to the present embodiment. In the UI 472 illustrated in FIG. 11, "dog" is associated with a unit that is highly responsive to "dog". Similarly, "curly tail" is associated with a unit that is highly responsive to "curly tail", "ears" is associated with a unit that is highly responsive to "ears", and "four legs" is associated with a unit that is highly responsive to "four legs".

<3.3. Second method>

• First data set

Similarly to the first method, the system 1 (for example, the first acquisition section 131) acquires a first data set including combinations of input data and output data obtained by inputting the input data into the neural network.

• Second data set

Similarly to the first method, the system 1 (for example, the second acquisition section 132) acquires one or more second data sets that include items with the same values as the first data set. Similarly to the first method, the second data set includes items with the same values as the first data set, and items corresponding to the output data.

In particular, in the second method, the second data set may include, among the items included in the input data, a first item whose values are different from the first data set, and another second item as well as an item corresponding to the output data whose values are identical to the first data set. For example, the first item corresponds to an input item which is a target of the response visualization, while the second item corresponds to an input item which is not a target of the response visualization. For example, in the case in which the target of the response visualization is the age of the building, a second data set is acquired in which, among the input items, only the age of the building is different, while the other input items and the real estate price are identical. In other words, the second data set corresponds to the backpropagation error of the input item which is the target of the response visualization, expressed by the above Formula (18). With this arrangement, the second data set becomes an appropriate data set for providing a response relationship to the user.

The second data set includes a data set generated by backpropagation in a neural network taught on the basis of a data set actually observed in past time. Specifically, the system 1 (for example, the computation section 133) uses the above Formula (18) to compute the response of the input unit which is the target of visualization in the case of adding an error on the output unit side. Herein, the input and output units may be units of the input layer and the output layer of the neural network, or units of selected intermediate layers. The error on the output unit side is repeatedly calculated using a random number (for example, a Gaussian random number) that takes a value in the first data set as a center value. It is assumed that the standard deviation of the random number can be set by the user. Meanwhile, on the input unit side, a distribution corresponding to the random number on the output unit side is obtained.

• Generation of information indicating positioning

The system 1 (for example, the generation section 134) generates information indicating the positioning of the first data set in the relationship with the second data set.

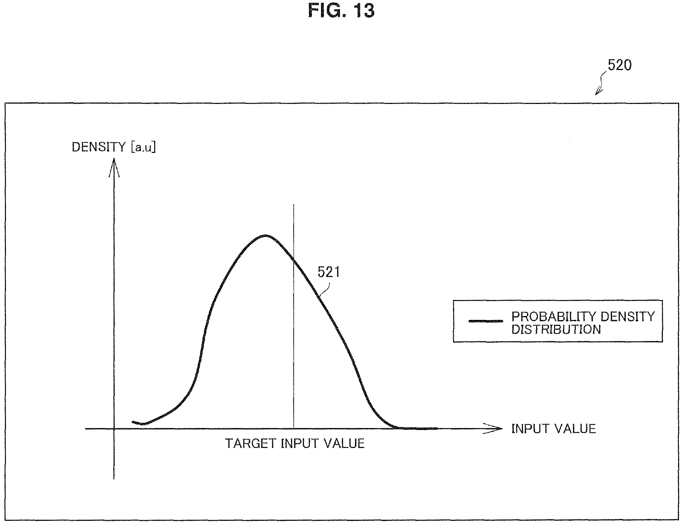

In the second method, the information indicating the positioning may also be information indicating the position of the input data in the distribution of the second data set for which the values of items corresponding to the output data are identical to the output data. In this case, the system 1 provides information indicating the position of the input data in the first data set in the distribution of input values produced on the input unit side in response to an error added on the output unit side, for example. A UI example of this case will be described with reference to FIGS. 12 and 13.

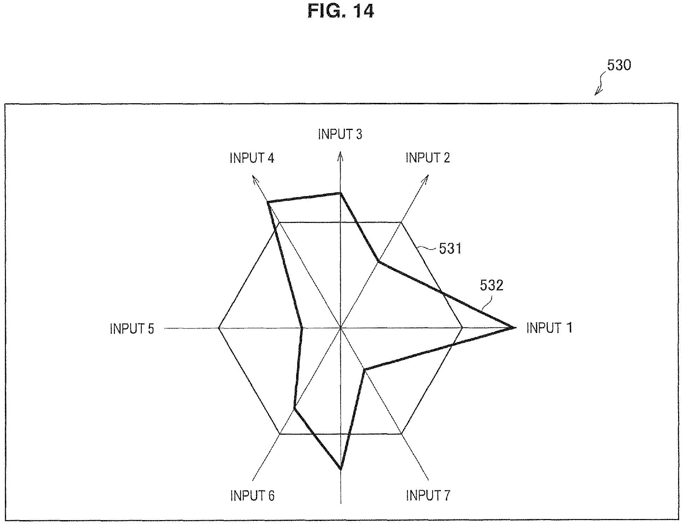

Also, in the second method, the information indicating the positioning may also be information indicating the deviation value of the input data in the distribution of the second data set for which the values of items corresponding to the output data are identical to the output data. In this case, the system 1 provides information indicating the deviation value of the input data in the first data set in the distribution of input values produced on the input unit side in response to an error added on the output unit side, for example. A UI example of this case will be described with reference to FIG. 14.

FIG. 12 is a diagram illustrating an example of a UI according to the present embodiment. By the UI 510 illustrated in FIG. 12, the user is able to set the conditions of the response visualization. For example, by pressing buttons 511, the user is able to select the input item to treat as the target of visualization.

FIG. 13 is a diagram illustrating an example of a UI according to the present embodiment. In the UI 520 illustrated in FIG. 13, a curve 521 of a probability density distribution of the response of an input value in the case of adding an error to an output value is visualized. The X axis of the graph corresponds to the input value, and the Y axis indicates the probability density. In the UI 520, the position of the target input value in the probability distribution is visualized.

FIG. 14 is a diagram illustrating an example of a UI according to the present embodiment. In the UI 530 illustrated in FIG. 14, deviation values determined by the center of the distribution of the response of input values and the distribution width are visualized. The graph 531 illustrates the position of a deviation value of 50. The graph 532 illustrates the position of the deviation value of each input value in the first data set. By the UI 530, the user becomes able to compare the first data set and the second data set. A higher deviation value may also be calculated simply as the value of an input value goes higher. For example, expressed in terms of time on foot, a higher deviation value in the UI 530 may be calculated as the time on foot goes higher. Otherwise, a higher deviation value may be calculated as the value of an input value imparts more of the desired response in the output value. Generally, real estate price tends to rise as the time on foot goes lower. For this reason, when expressed in terms of time on foot, for example, a higher deviation value in the UI 530 may be calculated as the time on foot goes lower. The necessity of such switching may be set by the user, for example.

Note that the deviation value may also be calculated by a method other than the method using a random number described above. For example, the deviation value of the first data set in the distribution of accumulated actual data may be calculated. With this arrangement, the user becomes able to know the absolute positioning of the first data set in the actual data as a whole. Otherwise, in the case in which the inputs values are locked to some degree, the method using a random number described above, by which the positioning of the target input value among input values that obtain a similar output value can be known, is effective.

In addition, the foregoing describes a case in which the input values are continuous quantities, the present technology is not limited to such an example. For example, the input values may also be discrete quantities. In the case of discrete quantities, the calculation of deviation values may become difficult, but an occurrence distribution of the discrete quantities may be calculated, and the occurrence probability may be used instead of deviation values.

Also, besides deviation values, the distribution width of input values, for example, may also be provided in the UI 530. Even if the output value is the same, since the correlation is weak between an input value with a large distribution width and the output value, the degree of contribution to the output value is understood to be low. For example, degree of contribution = 1/distribution width.

Also, likewise in the second method, a UI for neural network design assistance described in relation to the first method may also be provided.

<3-4. Process flow>

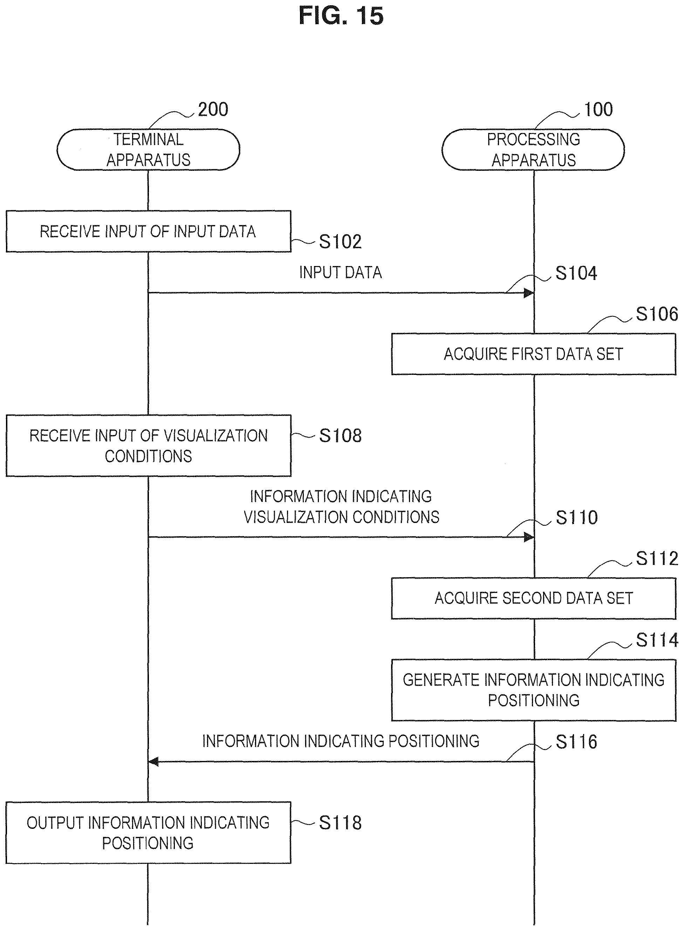

Next, FIG. 15 will be referenced to describe an example of the flow of a process for visualizing the response of a neural network described above.

FIG. 15 is a diagram illustrating an example of the flow of a process of visualizing the response of a neural network executed in the system 1 according to the present embodiment. As illustrated in FIG. 15, the processing apparatus 100 and the terminal apparatus 200 are involved in this sequence. First, the terminal apparatus 200 (for example, the input section 210) receives the input of input data (step S102). Subsequently, the terminal apparatus 200 (for example, the notification section 251) transmits the input data to the processing apparatus 100 (step S104). Next, the processing apparatus 100 (for example, the first acquisition section 131 and the computation section 133) inputs the input data into the neural network to obtain output data, and thereby acquires the first data set (step S106). Subsequently, the terminal apparatus 200 (for example, the input section 210) receives the input of visualization conditions (step S108). Next, the terminal apparatus 200 (for example, the notification section 251) transmits information indicating the input visualization conditions to the processing apparatus 100 (step S110). Subsequently, the processing apparatus 100 (for example, the second acquisition section 132 and the computation section 133) executes computation of the neural network with a disturbance added to an input value or backpropagation with an error added to an output value on the basis of the visualization conditions, and thereby acquires the second data set (step S112). Subsequently, the processing apparatus 100 (for example, the generation section 134) generates information indicating the positioning (step S114). Next, the processing apparatus 100 (for example, the notification section 135) transmits the generated information indicating the positioning to the terminal apparatus 200, and the terminal apparatus 200 (for example, the acquisition section 253) acquires the transmitted information (step S116). Subsequently, the terminal apparatus 200 (for example, the output section 220) outputs the information indicating the positioning (step S118).

<<4. Application examples>>

The present technology is usable in any application for a classification problem that determines a category to which input data belongs, or for a regression problem that predicts output data obtained by input data. In the following, as one example, an example of an application for a regression problem will be described.

Also, the present technology is able to take a variety of input data and output data. The input data is attribute information about an evaluation target, and the output data is an evaluation value of the evaluation target. For example, to cite the example above, the evaluation target may be real estate, and the evaluation value may be the price of the real estate.

(1) Real estate price assessment application

For example, an example in which a user assesses real estate prices on an Internet site is anticipated. In this case, the processing apparatus 100 corresponds to a user terminal that the user operates, and the processing apparatus 100 may exist on the backend of the Internet site.

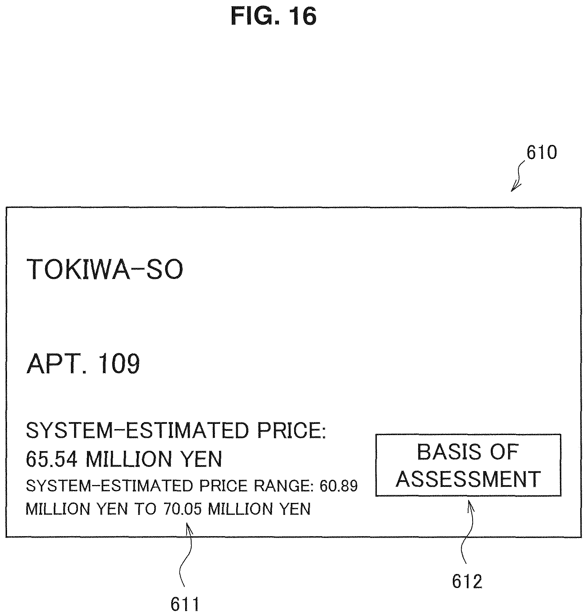

Suppose that the user desires to sell or purchase "Tokiwa-so Apt. 109". The user inputs attribute information about the real estate into the Internet site, and is provided with an estimated result of the assessed price. An example of the UI in this case is illustrated in FIG. 16.

FIG. 16 is a diagram illustrating an example of a UI according to the present embodiment. As illustrated in the UI 610, the estimated result of the assessed price is provided as the "System-estimated price" in a display field 611, for example. The system 1 estimates the assessed price by computation with the attribute information input into the neural network as input data. Attribute information which is not input, such as average values or the like, may also be used. Besides estimating the assessed price, a price range of the assessed price may also be estimated. The estimated result of the price range of the assessed price is provided as "System-estimated price range" in the display field 611, for example.

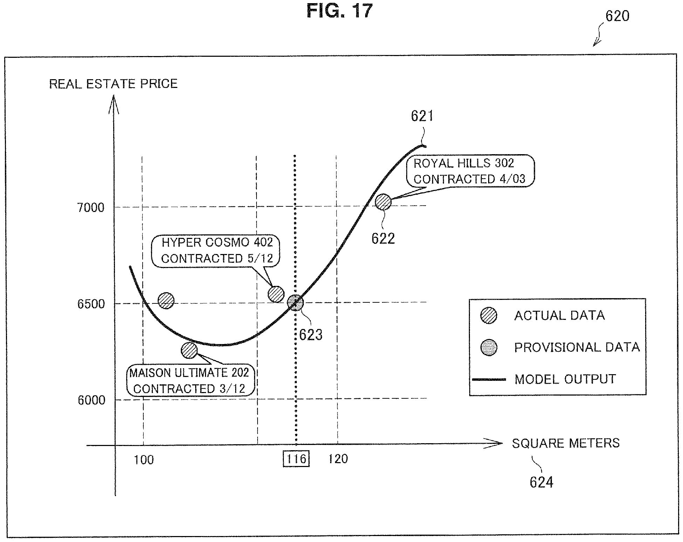

As described above, the system 1 is capable of providing the basis of a computational result of the neural network. For example, if a button 612 is selected, the system 1 provides the basis of assessment, that is, information indicating the basis of the price indicated in the system-estimated price or the system-estimated price range. An example of the UI is illustrated in FIG. 17.

FIG. 17 is a diagram illustrating an example of a UI according to the present embodiment. The UI 620 illustrated in FIG. 17 is a UI corresponding to the UI 430 described above. In the UI 620, as one example, suppose that the X axis is the number of square meters, and the Y axis is the system-estimated price. Also, suppose that the input number of square meters is 116 square meters. A model output curve 621 illustrates the curve of output values from the neural network in the case of varying the numbers square meters virtually. Also, actual data 622 illustrates a number of square meters and a real estate price in past data. Provisional data 623 illustrates the number of square meters actually input by the user, and the computed system-estimated price.

First, the user is able to confirm that the provisional data 623 is on the model output curve 621. In addition, the user is also able to confirm the contents (for example, other attribute information besides the number of square meters) of the actual data 622 linked to the plot of the actual data 622. The user is also able to switch the X axis from the number of square meters to another input item. For example, if the user selects an X axis label 624, a candidate list of input items, such as the age of the building, is displayed, and the input item corresponding to the X axis may be switched in response to a selection from the list. From this information, the user is able to confirm that the assessed price is appropriate.

In this way, by applying the present technology to a real estate price assessment application, the user is able to confirm the basis of the assessed price. In the related art, even if a real estate agent provides such a basis, the appropriateness of the basis is unclear, and for example, there is also the possibility that a basis of weak reliability including the agent's intentions may be provided. In contrast, according to the present technology, since the basis by which the calculator has calculated automatically is provided, a basis of higher reliability is provided.

(2) Work of art evaluation application

The evaluation target in this application is a work of art. The evaluation value may be a score of the work of art. In the following, a piano performance is assumed as one example of a work of art.

For example, in a musical competition, a score is assigned by a judge. Specifically, the judge evaluates the performance on multiple axes. Conceivable evaluation axes are, for example, the selection of music, the expression of the music, the assertiveness of the performer, the technical skill, the sense of tempo, the sense of rhythm, the overall balance of the music, the pedaling, the touch, the tone, and the like. Evaluation on each of these evaluation axes may be executed on the basis of the judge's experience. Subsequently, the judge calculates a score by weighting each of the evaluation results. The weighting may also be executed on the basis of the judge's experience.

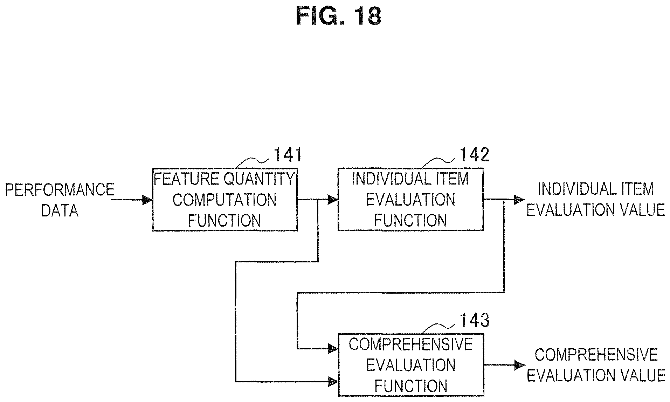

The system 1 may also execute evaluation conforming to such an evaluation method by a judge. A computational process for this case will be described with reference to FIG. 18.

FIG. 18 is a diagram for explaining a process of evaluating a work of art according to the present embodiment. As illustrated in FIG. 18, first, the system 1 inputs performance data obtained by recording a piano performance into a feature quantity computation function 141 to compute feature quantities. The feature quantity computation function 141 samples and digitizes the sound produced by the performance, and computes feature quantities from the digitized sound. Subsequently, the system 1 inputs the computed feature quantities into an individual item evaluation function 142 to compute individual item evaluation values, which are the evaluation values on each of the evaluation axes. The individual item evaluation function 142 computes an evaluation value for each evaluation axis, such as the sense of tempo, for example. Additionally, the system 1 inputs the feature quantities and the individual item evaluation values into a comprehensive evaluation function 143 to compute a comprehensive evaluation value. The comprehensive evaluation function 143, for example, weights the individual item evaluation values while also taking the evaluation values into account based on the feature quantities to compute the comprehensive evaluation value.

Each of the feature quantity computation function 141, the individual item evaluation function 142, and the comprehensive evaluation function 143 may be configured by a neural network, or may be an approximate function of a neural network. For example, in the case of applying the present technology in the comprehensive evaluation function 143, the system 1 becomes able to provide the basis of the appropriateness of the evaluation by providing the response in the case of varying the performance data, the contribution of an individual item evaluation value when the comprehensive evaluation is modified, and the like.

The above gives a piano performance as one example of a work of art, but the present technology is not limited to such an example. For example, the work of art to be evaluated may also be a song, a painting, a literary work, or the like.

(3) Sports evaluation application

The evaluation target in this application is a sport. The evaluation value may be a score in the sport. Herein, the score in the sport does not refer to something that is easy to quantify, like the score in soccer or the time in a track and field event, but instead refers to something that is difficult to quantify, like the points of a figure skating performance. In the following, figure skating is assumed as one example of a sport.

For example, a figure skating performance is assigned a score by a judge. Specifically, the judge evaluates the performance on multiple axes. The evaluation axes are, for example, the skating skill, how the elements are connected, the motion, the carriage of the body, the choreography, the composition, the interpretation of the music, and the like. Evaluation on each of these evaluation axes may be executed on the basis of the judge's experience. Subsequently, the judge calculates a score by weighting each of the evaluation results. The weighting may also be executed on the basis of the judge's experience. In figure skating, to avoid an arbitrary evaluation by a judge, the evaluations of judges with high or low scores are excluded to make a comprehensive evaluation. In the future, this evaluation could also be executed by machines.

Accordingly, the system 1 may evaluate a sport by a process similar to the process of evaluating a work of art described above with reference to FIG. 18. In this case, the input data may be a video obtained by recording the performer. With this arrangement, the system 1 becomes able to provide the basis of the appropriateness of the evaluation by providing the response in the case of varying the video, the contribution of an individual item evaluation value when the comprehensive evaluation is modified, and the like.

<<5. Hardware configuration example>>

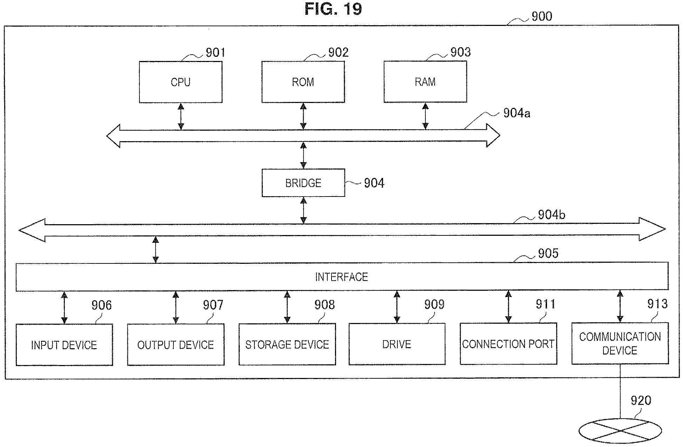

Finally, a hardware configuration of an information processing apparatus according to the present embodiment will be described with reference to FIG. 19. FIG. 19 is a block diagram illustrating an example of the hardware configuration of the information processing apparatus according to the present embodiment. Meanwhile, the information processing apparatus 900 illustrated in FIG. 19 may realize the information processing apparatus 100 or the terminal apparatus 200 illustrated in each of FIGS. 2 and 3, for example. Information processing by the information processing apparatus 100 or the terminal apparatus 200 according to the present embodiment is realized according to cooperation between software and hardware described below.

As illustrated in FIG. 19, the information processing apparatus 900 includes a central processing unit (CPU) 901, a read only memory (ROM) 902, a random access memory (RAM) 903 and a host bus 904a. In addition, the information processing apparatus 900 includes a bridge 904, an external bus 904b, an interface 905, an input device 906, an output device 907, a storage device 908, a drive 909, a connection port 911 and a communication device 913. The information processing apparatus 900 may include a processing circuit such as a DSP or an ASIC instead of the CPU 901 or along therewith.

The CPU 901 functions as an arithmetic processing device and a control device and controls the overall operation in the information processing apparatus 900 according to various programs. Further, the CPU 901 may be a microprocessor. The ROM 902 stores programs, operation parameters and the like used by the CPU 901. The RAM 903 temporarily stores programs used in execution of the CPU 901, parameters appropriately changed in the execution, and the like. The CPU 901 can form the control section 130 illustrated in FIG. 2 or the control section 250 illustrated in FIG. 3, for example.

The CPU 901, the ROM 902 and the RAM 903 are connected by the host bus 904a including a CPU bus and the like. The host bus 904a is connected with the external bus 904b such as a peripheral component interconnect/interface (PCI) bus via the bridge 904. Further, the host bus 904a, the bridge 904 and the external bus 904b are not necessarily separately configured and such functions may be mounted in a single bus.

The input device 906 is realized by a device through which a user inputs information, such as a mouse, a keyboard, a touch panel, a button, a microphone, a switch, and a lever. In addition, the input device 906 may be a remote control device using infrared ray or other electric waves or external connection equipment such as a cellular phone or a PDA corresponding to operation of the information processing apparatus 900, for example. Furthermore, the input device 906 may include an input control circuit or the like which generates an input signal on the basis of information input by the user using the aforementioned input means and outputs the input signal to the CPU 901, for example. The user of the information processing apparatus 900 may input various types of data or order a processing operation for the information processing apparatus 900 by operating the input device 906.

In addition to the above, the input device 906 can be formed by a device that detects information related to the user. For example, the input device 906 can include various sensors such as an image sensor (a camera, for example), a depth sensor (a stereo camera, for example), an acceleration sensor, a gyro sensor, a geomagnetic sensor, an optical sensor, a sound sensor, a distance measurement sensor, and a force sensor. Also, the input device 906 may acquire information related to the state of the information processing apparatus 900 itself such as the posture and the moving velocity of the information processing apparatus 900 and information related to a surrounding environment of the information processing apparatus 900 such as brightness or noise around the information processing apparatus 900. Also, the input device 906 may include a GNSS module that receives a GNSS signal (a GPS signal from a global positioning system (GPS) satellite, for example) from a global navigation satellite system (GNSS) satellite and measures position information including the latitude, the longitude, and the altitude of the device. In addition, the input device 906 may detect the position through Wi-Fi (registered trademark), transmission and reception to and from a mobile phone, a PHS, a smartphone, or the like, near-field communication, or the like, in relation to the position information. The input device 906 can form the input section 210 illustrated in FIG. 3, for example.

The output device 907 is formed by a device that may visually or aurally notify the user of acquired information. As such devices, there is a display device such as a CRT display device, a liquid crystal display device, a plasma display device, an EL display device, a laser projector, an LED projector or a lamp, a sound output device such as a speaker and a headphone, a printer device and the like. The output device 907 outputs results acquired through various processes performed by the information processing apparatus 900, for example. Specifically, the display device visually displays results acquired through various processes performed by the information processing apparatus 900 in various forms such as text, images, tables and graphs. On the other hand, the sound output device converts audio signals including reproduced sound data, audio data and the like into analog signals and aurally outputs the analog signals. The aforementioned display device or the aforementioned sound output device may form the output section 220 illustrated in FIG. 3, for example.

The storage device 908 is a device for data storage, formed as an example of a storage section of the information processing apparatus 900. For example, the storage device 908 is realized by a magnetic storage device such as an HDD, a semiconductor storage device, an optical storage device, a magneto-optical storage device or the like. The storage device 908 may include a storage medium, a recording device for recording data on the storage medium, a reading device for reading data from the storage medium, a deletion device for deleting data recorded on the storage medium and the like. The storage device 908 stores programs and various types of data executed by the CPU 901, various types of data acquired from the outside and the like. The storage device 908 may form the storage section 120 illustrated in FIG. 2 or the storage section 240 illustrated in FIG. 3, for example.

The drive 909 is a reader/writer for storage media and is included in or externally attached to the information processing apparatus 900. The drive 909 reads information recorded on a removable storage medium such as a magnetic disc, an optical disc, a magneto-optical disc or a semiconductor memory mounted thereon and outputs the information to the RAM 903. In addition, the drive 909 can write information on the removable storage medium.

The connection port 911 is an interface connected with external equipment and is a connector to the external equipment through which data may be transmitted through a universal serial bus (USB) and the like, for example.

The communication device 913 is a communication interface formed by a communication device for connection to a network 920 or the like, for example. The communication device 913 is a communication card or the like for a wired or wireless local area network (LAN), long term evolution (LTE), Bluetooth (registered trademark) or wireless USB (WUSB), for example. In addition, the communication device 913 may be a router for optical communication, a router for asymmetric digital subscriber line (ADSL), various communication modems or the like. For example, the communication device 913 may transmit/receive signals and the like to/from the Internet and other communication apparatuses according to a predetermined protocol, for example, TCP/IP or the like. The communication device 913 may form the communication section 110 illustrated in FIG. 2 or the communication section 230 illustrated in FIG. 3, for example.

Further, the network 920 is a wired or wireless transmission path of information transmitted from devices connected to the network 920. For example, the network 920 may include a public circuit network such as the Internet, a telephone circuit network or a satellite communication network, various local area networks (LANs) including Ethernet (registered trademark), a wide area network (WAN) and the like. In addition, the network 920 may include a dedicated circuit network such as an internet protocol-virtual private network (IP-VPN).

Hereinbefore, an example of a hardware configuration capable of realizing the functions of the information processing apparatus 900 according to this embodiment is shown. The respective components may be implemented using universal members, or may be implemented by hardware specific to the functions of the respective components. Accordingly, according to a technical level at the time when the embodiments are executed, it is possible to appropriately change hardware configurations to be used.

In addition, a computer program for realizing each of the functions of the information processing apparatus 900 according to the present embodiment as described above may be created, and may be mounted in a PC or the like. Furthermore, a computer-readable recording medium on which such a computer program is stored may be provided. The recording medium is a magnetic disc, an optical disc, a magneto-optical disc, a flash memory, or the like, for example. Further, the computer program may be delivered through a network, for example, without using the recording medium.

<<6. Conclusion>>

The above describes an embodiment of the present disclosure in detail, with reference to FIGS. 1 to 19. As described above, the system 1 according to the present embodiment acquires a first data set including combinations of input data and output data obtained by inputting the input data into a neural network, acquires one or more second data sets including items identical to the first data set, and generates information indicating the positioning of the first data set in the relationship with the one or more second data sets. With the information indicating the positioning, it becomes possible to provide the basis indicating the appropriateness of a computational result of the neural network to the user. With this arrangement, the user becomes able to accept the computational result easily.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, in the foregoing embodiments, the processing apparatus 100 and the terminal apparatus 200 are described as individual apparatus, but the present technology is not limited to such an example. For example, the processing apparatus 100 and the terminal apparatus 200 may also be realized as a single apparatus.

Note that it is not necessary for the processing described in this specification with reference to the flowchart and the sequence diagram to be executed in the order shown in the flowchart. Some processing steps may be performed in parallel. Further, some of additional steps can be adopted, or some processing steps can be omitted.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.

(1) An information processing apparatus including:

a first acquisition section that acquires a first data set including a combination of input data and output data obtained by inputting the input data into a neural network;

a second acquisition section that acquires one or more second data sets including an item identical to the first data set; and

a generation section that generates information indicating a positioning of the first data set in a relationship with the one or more second data sets.

(2) The information processing apparatus according to (1), in which

the one or more second data sets include an item of identical value to the first data set.

(3) The information processing apparatus according to (2), in which

in the one or more second data sets, among items included in the input data, a value of a first item is different from the first data set, while a value of a second item other than the first item is identical to the first data set.

(4) The information processing apparatus according to (3), in which

the information indicating the positioning includes information indicating a relationship between the value of the first item and a value of an item corresponding to the output data in the first data set and the one or more second data sets.

(5) The information processing apparatus according to (2), in which

the one or more second data sets include a data set generated by the neural network taught on a basis of a data set actually observed in past time.

(6) The information processing apparatus according to (2), in which

the one or more second data sets include a data set actually observed in past time.

(7) The information processing apparatus according to (2), in which

in the one or more second data sets, among items included in the input data, a value of a first item is different from the first data set, while a value of a second item other than the first item and a value of an item corresponding to the output data are identical to the first data set.

(8) The information processing apparatus according to (7), in which

the information indicating the positioning is information indicating a position of the input data in a distribution of the one or more second data sets for which a value of an item corresponding to the output data is identical to the output data.

(9) The information processing apparatus according to (7), in which

the information indicating the positioning is information indicating a deviation value of the input data in a distribution of the one or more second data sets for which a value of an item corresponding to the output data is identical to the output data.

(10) The information processing apparatus according to (1), in which

the generation section generates information indicating a response relationship between an input value into a unit of an input layer and an output value from a unit of an output layer, the input layer and the output layer being selected from intermediate layers of the neural network.

(11) The information processing apparatus according to (10), in which

the information indicating the response relationship is a graph.

(12) The information processing apparatus according to (10), in which

the information indicating the response relationship is a function.

(13) The information processing apparatus according to (10), in which

the generation section generates information for proposing a removal of a unit in the input layer that does not contribute to an output value from a unit in the output layer.

(14) The information processing apparatus according to (1), in which

the input data is attribute information about an evaluation target, and

the output data is an evaluation value of the evaluation target.

(15) The information processing apparatus according to (14), in which

the evaluation target is real estate, and

the evaluation value is a price.

(16) The information processing apparatus according to (14), in which

the evaluation target is a work of art.

(17) The information processing apparatus according to (14), in which

the evaluation target is a sport.

(18) An information processing apparatus including:

a notification section that notifies an other apparatus of input data; and

an acquisition section that acquires, from the other apparatus, information indicating a positioning of a first data set in a relationship with a second data set including an item identical to the first data set, the first data set including a combination of output data obtained by inputting the input data into a neural network.

(19) An information processing method including:

acquiring a first data set including a combination of input data and output data obtained by inputting the input data into a neural network;
acquiring one or more second data sets including an item identical to the first data set; and
generating, by a processor, information indicating a positioning of the first data set in a relationship with the one or more second data sets.

(20) An information processing method including:

notifying an other apparatus of input data; and
acquiring, by a processor, from the other apparatus, information indicating a positioning of a first data set in a relationship with a second data set including an item identical to the first data set, the first data set including a combination of output data obtained by inputting the input data into a neural network.

Reference Signs List

1       system
100     processing apparatus
110     communication section
120     storage section
130     control section
131     first acquisition section 131
132     second acquisition section 132
133     computation section 133
134     generation section 134
135     notification section 135
200     terminal apparatus
210     input section
220     output section
230     communication section
240     storage section
250     control section
251     notification section
253     acquisition section

**Claims**

1.  An information processing apparatus comprising:

a first acquisition section that acquires a first data set including a combination of input data and output data obtained by inputting the input data into a neural network;
a second acquisition section that acquires one or more second data sets including an item identical to the first data set; and
a generation section that generates information indicating a positioning of the first data set in a relationship with the one or more second data sets.

2.  The information processing apparatus according to claim 1, wherein
the one or more second data sets include an item of identical value to the first data set.

3.  The information processing apparatus according to claim 2, wherein
in the one or more second data sets, among items included in the input data, a value of a first item is different from the first data set, while a value of a second item other than the first item is identical to the first data set.

**4.** The information processing apparatus according to claim 3, wherein
the information indicating the positioning includes information indicating a relationship between the value of the first item and a value of an item corresponding to the output data in the first data set and the one or more second data sets.

**5.** The information processing apparatus according to claim 2, wherein
the one or more second data sets include a data set generated by the neural network taught on a basis of a data set actually observed in past time.

**6.** The information processing apparatus according to claim 2, wherein
the one or more second data sets include a data set actually observed in past time.

**7.** The information processing apparatus according to claim 2, wherein
in the one or more second data sets, among items included in the input data, a value of a first item is different from the first data set, while a value of a second item other than the first item and a value of an item corresponding to the output data are identical to the first data set.

**8.** The information processing apparatus according to claim 7, wherein
the information indicating the positioning is information indicating a position of the input data in a distribution of the one or more second data sets for which a value of an item corresponding to the output data is identical to the output data.

**9.** The information processing apparatus according to claim 7, wherein
the information indicating the positioning is information indicating a deviation value of the input data in a distribution of the one or more second data sets for which a value of an item corresponding to the output data is identical to the output data.

**10.** The information processing apparatus according to claim 1, wherein
the generation section generates information indicating a response relationship between an input value into a unit of an input layer and an output value from a unit of an output layer, the input layer and the output layer being selected from intermediate layers of the neural network.

**11.** The information processing apparatus according to claim 10, wherein
the information indicating the response relationship is a graph.

**12.** The information processing apparatus according to claim 10, wherein
the information indicating the response relationship is a function.

**13.** The information processing apparatus according to claim 10, wherein
the generation section generates information for proposing a removal of a unit in the input layer that does not contribute to an output value from a unit in the output layer.

**14.** The information processing apparatus according to claim 1, wherein
the input data is attribute information about an evaluation target, and
the output data is an evaluation value of the evaluation target.

**15.** The information processing apparatus according to claim 14, wherein
the evaluation target is real estate, and
the evaluation value is a price.

**16.** The information processing apparatus according to claim 14, wherein
the evaluation target is a work of art.

**17.** The information processing apparatus according to claim 14, wherein
the evaluation target is a sport.

**18.** An information processing apparatus comprising:

a notification section that notifies an other apparatus of input data; and

an acquisition section that acquires, from the other apparatus, information indicating a positioning of a first data set in a relationship with a second data set including an item identical to the first data set, the first data set including a combination of output data obtained by inputting the input data into a neural network.

19. An information processing method comprising:

acquiring a first data set including a combination of input data and output data obtained by inputting the input data into a neural network;
acquiring one or more second data sets including an item identical to the first data set; and
generating, by a processor, information indicating a positioning of the first data set in a relationship with the one or more second data sets.

20. An information processing method comprising:

notifying an other apparatus of input data; and
acquiring, by a processor, from the other apparatus, information indicating a positioning of a first data set in a relationship with a second data set including an item identical to the first data set, the first data set including a combination of output data obtained by inputting the input data into a neural network.

# FIG. 1

300

1

200

100

| TERMINAL APPARATUS | | PROCESSING APPARATUS |

**FIG. 2**

# FIG. 3

# FIG. 4

410

```
INPUT 1: 9 MINUTES
INPUT 2:  118m²
INPUT 3:  10 YEARS
. . .
OUTPUT: 65 MILLION YEN
```

# FIG. 5

420

HORIZONTAL AXIS:

| INPUT 1 | | INPUT 2 | | INPUT 3 | . . . | ← 421

RANGE OF VARIATION OF INPUT VALUE | | ← 422

VERTICAL AXIS:

| OUTPUT |

423

FIG. 6

## FIG. 7

FIG. 8

450

441

444

445A 445B

442

451

442

443

x1 x2

443

y=f1(f2.......(x1,x2))

446 y

443

FIG. 9

460

441

444

445A    445B

x1    x2    442

442

461

443

443

y

446

y=g1 × x1 + g2 × x2 + b

FIG. 10

470

441

444

461

445A    445B

y=g1 × x1 + g2 × x2 + b

442

442

x1    x2

443

443

471

REMOVE SELECTED
OUTPUT UNIT?

446

y

446

YES    NO

472    473

# FIG. 11

472

| CURLY TAIL | EARS | FOUR LEGS |

DOG

# FIG. 12

510

DISTRIBUTION DISPLAY ITEMS:

| INPUT 1 | INPUT 2 | INPUT 3 | ... |

511

FIG. 13

FIG. 14

# FIG. 15

200 ∽ TERMINAL APPARATUS

100 ∽ PROCESSING APPARATUS

| RECEIVE INPUT OF INPUT DATA | ∽S102 |

INPUT DATA → ∽S104

∽S106
ACQUIRE FIRST DATA SET

| RECEIVE INPUT OF VISUALIZATION CONDITIONS | ∽S108 |

INFORMATION INDICATING
VISUALIZATION CONDITIONS → ∽S110

∽S112
ACQUIRE SECOND DATA SET

∽S114
GENERATE INFORMATION INDICATING
POSITIONING

INFORMATION INDICATING POSITIONING ← ∽S116

| OUTPUT INFORMATION INDICATING POSITIONING | ∽S118 |

# FIG. 16

610

TOKIWA-SO

APT. 109

SYSTEM-ESTIMATED PRICE:
65.54 MILLION YEN
SYSTEM-ESTIMATED PRICE RANGE: 60.89
MILLION YEN TO 70.05 MILLION YEN

BASIS OF
ASSESSMENT

611

612

**FIG. 17**

# FIG. 18

PERFORMANCE
DATA → FEATURE QUANTITY COMPUTATION FUNCTION ~141 → INDIVIDUAL ITEM EVALUATION FUNCTION ~142 → INDIVIDUAL ITEM EVALUATION VALUE

COMPREHENSIVE EVALUATION FUNCTION ~143 → COMPREHENSIVE EVALUATION VALUE

**FIG. 19**

900

| 901 | 902 | 903 |
|---|---|---|
| CPU | ROM | RAM |

904a

BRIDGE ~ 904

904b

905

| INTERFACE |
|---|

| 906 | 907 | 908 | 909 | 911 | 913 |
|---|---|---|---|---|---|
| INPUT DEVICE | OUTPUT DEVICE | STORAGE DEVICE | DRIVE | CONNECTION PORT | COMMUNICATION DEVICE |

920

**INTERNATIONAL SEARCH REPORT**

| International application No. |
|---|
| PCT/JP2016/087186 |

| A. CLASSIFICATION OF SUBJECT MATTER |
|---|
| *G06N3/02*(2006.01)i, *G06F17/30*(2006.01)i, *G06N99/00*(2010.01)i |

According to International Patent Classification (IPC) or to both national classification and IPC

| B. FIELDS SEARCHED |
|---|

Minimum documentation searched (classification system followed by classification symbols)
G06N3/02, G06F17/30, G06N99/00

Documentation searched other than minimum documentation to the extent that such documents are included in the fields searched
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 05-035707 A (Hitachi, Ltd.),<br>12 February 1993 (12.02.1993),<br>paragraphs [0007] to [0014]<br>& US 5577166 A<br>column 5, line 21 to column 9, line 11 | 1-20 |
| Y | JP 05-225163 A (Hitachi, Ltd.),<br>03 September 1993 (03.09.1993),<br>paragraphs [0011] to [0020]<br>(Family: none) | 1-20 |
| Y | JP 11-282823 A (Kabushiki Kaisha Ricchi Hyoka Kenkyusho),<br>15 October 1999 (15.10.1999),<br>paragraphs [0039] to [0040], [0091] to [0099]<br>(Family: none) | 2-9,14-17 |

☒ Further documents are listed in the continuation of Box C.   ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 02 February 2017 (02.02.17) | 14 February 2017 (14.02.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

International application No.

PCT/JP2016/087186

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 05-061849 A  (Toyoda Machine Works, Ltd.), 12 March 1993 (12.03.1993), paragraphs [0041] to [0045] & US 5333238 A column 6, line 67 to column 7, line 57 & EP 529628 A2 | 4,10-13 |
| Y | JP 2001-344590 A  (Fuji Electric Co., Ltd.), 14 December 2001 (14.12.2001), paragraphs [0092] to [0101] (Family: none) | 7-9,12-13 |
| Y | JP 2007-094631 A  (Hitachi Electronics Services Co., Ltd.), 12 April 2007 (12.04.2007), paragraphs [0046] to [0048] (Family: none) | 10-13 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014092878 A